# EUROPÄISCHE PATENTSCHRIFT

(11) **EP 1 176 090 B1**
(45) Veröffentlichungstag und Bekanntmachung des Hinweises auf die Patenterteilung: **22.09.2004**
(21) Anmeldenummer: 01117484.4
(22) Anmeldetag: 19.07.2001
(51) Int. Cl.: B64D 13/06, B01D 45/08

(54) **Klimatisierungssystem für Flugzeuge**
Air conditioning system for aircraft
Système de conditionnement d'air pour un aéronef

(30) Priorität: 26.07.2000 DE 10036443
(43) Veröffentlichungstag der Anmeldung: 30.01.2002
(73) Patentinhaber: Liebherr-Aerospace Lindenberg GmbH, 88161 Lindenberg/Allgäu (DE)
(72) Erfinder: Sauterleute, Alfred, 88178 Heimenkirch (DE); Jonqueres, Michel, Torrance, CA 90505 (US)
(74) Vertreter: Laufhütte, Dieter, Dr.-Ing.

(56) Entgegenhaltungen:
- EP-A- 0 019 492
- WO-A-99/51492
- WO-A-99/59867
- CH-A- 261 037
- DE-A- 2 307 011
- DE-A- 19 935 918
- GB-A- 1 089 311
- US-A- 3 834 126
- US-A- 5 887 445

## Beschreibung

Die Erfindung betrifft ein Klimatisierungssystem für Flugzeuge zum Aufbereiten von Feuchtigkeit enthaltender, unter Überdruck stehender Luft zur Klimatisierung einer Flugzeugkabine.

Die Frischluft zur Klimatisierung von Flugzeugkabinen wird aus der dem Triebwerk mit hohem Druck und hoher Temperatur abgezapften Luft, der sogenannten Zapfluft, aufbereitet. Die Klimatisierungssysteme nutzen das Druck- und Temperaturpotential der Triebwerksluft zur Erzeugung der dazu erforderlichen Kühlleistung. Die Zapfluft wird im Laufe des Frischluftaufbereitungsprozesses abgekühlt, entfeuchtet und auf den Kabinendruck von ca. 1 bar im Bodenbetrieb bzw. ca. 0,8 bar im Flugbetrieb entspannt. Besonderer Wert wird bei der Frischluftaufbereitung auf die Luftentfeuchtung gelegt, um eine Vereisung einzelner Bauteile des Klimatisierungssystems und insbesondere eine Eiskristallbildung in der aufzubereitenden Frischluft zu verhindern. Die Notwendigkeit der Entfeuchtung besteht allerdings hauptsächlich im Bodenbetrieb, weil im Flugbetrieb, d.h. in großen Höhen, die Umgebungsluft und damit die abgezapfte Triebwerksluft ohnehin extrem trocken ist.

Ein Klimatisierungssystem gemäß dem Oberbegriff des Anspruchs 1 ist aus der WO 99/51492 bekannt.

Anhand der Figur 1 wird nachfolgend ein Klimatisierungssystem beschrieben, wie es beispielsweise aus der DE 199 35 918 derselben Anmelderin bekannt ist., welehe nicht zum stand der Technik nach Artikel 54(2) EPÜ gehölt.

Über ein Durchsatzregelventil 12 wird diejenige Menge Zapfluft 10 aus einem Triebwerk mit etwa 2 bar und 200°C abgezapft, die zur Frischluftversorgung für die Kabine benötigt wird. Im Bodenbetrieb wird die Zapfluft einem Hilfstriebwerk mit etwa 3 bar entzogen. Die Zapfluft wird zunächst über einen Primärwärmetauscher 14 geleitet und auf ca. 80°C abgekühlt. Bei dem Wärmetauscher handelt es sich um einen Luft-Luft-Wärmetauscher, wobei als Kühlmedium Umgebungsluft 16 verwendet wird. Der Volumenstrom der Kühlluft 16 wird im Bodenbetrieb über einen Ventilator 18 eingestellt. Im Flugbetrieb reicht die zugeführte Stauluft als Kühlmedium aus, wobei über eine Drosselklappe der Volumenstrom einstellbar ist. Die auf ca. 80°C abgekühlte Zapfluft wird in einem ersten Verdichter C1 und ausgehend von diesem in einem zweiten Verdichter C2 weiterverdichtet auf ca. 5 bar. Diese aus dem zweiten Verdichter kommende gespannte Luft wird in einem Hauptwärmetauscher 20, gleichfalls einem Luft-Luft-Wärmetauscher, mittels Umgebungsluft 16 auf ca. 50°C abgekühlt. Der hohe Druck von ca. 5 bar ist erforderlich, um in dem nachfolgenden Wasserabscheidekreislauf einen hohen Entfeuchtungsgrad realisieren zu können. Dieses sogenannte aircycle-System ist daher auch als "Hochdruckwasserabscheidekreislauf" bekannt.

Der Hochdruckwasserabscheidekreislauf umfaßt einen Kondensator 22, wie er beispielsweise auch in der EP 0 019 493 A vorgeschlagen ist, und einen dem Kondensator 22 nachgeschalteten Wasserabscheider 24. Die komprimierte, gekühlte Zapfluft wird in dem Kondensator 22 um etwa 15 K abgekühlt, wobei Wasser auskondensiert. Das kondensierte Wasser wird dann im Wasserabscheider 24 abgeschieden. Die so entfeuchtete Luft wird über zwei Entspannungsturbinen T1 und T2 geleitet, wobei die Luft auf einen Kabinendruck von ca. 1 bar entspannt wird. Die aus der ersten Turbine austretende Zapfluft wird, noch bevor sie der zweiten Entspannungsturbine zugeführt wird, in wärmetauschender Weise durch den Kondensator 22 des Hochdruckwasserabscheidekreislaufs geleitet, um die komprimierte, gekühlte Zapfluft auf die zur Wasserabscheidung im Wasserabscheider 24 notwendige Temperatur abzukühlen. Dabei erwärmt sich die in der Entspannungsturbine T1 entspannte und gekühlte Luft entsprechend dem im Kondensator übertragenen Wärmestrom. In dem Hochdruckkreislauf ist zusätzlich zu dem Kondensator 22 ein dem Kondensator 22 vorgeschalteter Wärmetauscher 26 vorgesehen. Durch den Wärmetauscher 26 wird zunächst die komprimierte, gekühlte Zapfluft geleitet, bevor sie in den Kondensator 22 eintritt, und anschließend wird durch den Wärmetauscher 26 die entfeuchtete Luft geleitet, bevor sie in die Entspannungsturbine T1 eintritt. Der Wärmetauscher 26 hat dabei im wesentlichen die Aufgabe, die entfeuchtete Luft zu erwärmen und Restfeuchte bei gleichzeitiger Energierückgewinnung zu verdampfen, bevor die Luft in die Turbine T1 eintritt. Gleichzeitig wird durch den Wärmetauscher 26 aber der Kondensator 22 dadurch entlastet, daß die komprimierte Zapfluft vor Eintritt in den Kondensator 22 um etwa 5 K zusätzlich vorgekühlt wird.

Die klimatisierte Luft, die aus der zweiten Turbine T2 bei ca. -10°C und etwa Umgebungsdruck austritt, wird dann in einer nicht dargestellten Mischkammer mit rezirkulierter Kabinenluft gemischt.

Typisch für ein Klimatisierungssystem der hier beschriebenen Art ist es, daß die in den Entspannungsturbinen T1 und T2 gewonnene Energie dazu benutzt wird, einerseits den Verdichter C2 bzw. C1 und andererseits zusätzlich den Ventilator 18 anzutreiben. In einem Fall sind drei Räder, d.h. Turbine (T2)/Verdichter (C1)/Ventilator auf einer gemeinsamen Welle angeordnet und bilden die sogenannte aircycle machine ACM, die auch als Drei-Rad-Maschine bezeichnet wird. Die Entspannungsturbine T1 ist mit dem Verdichter C2 auf einer gemeinsamen Welle jedoch getrennt von den vorgenannten drei Rädern angeordnet. Daher wird diese kombinierte Maschine auch insgesamt als 2 + 3-Rad-Maschine bezeichnet.

Das Gesamtsystem ist für den Bodenbetrieb bei einer Umgebungstemperatur von zum Beispiel 38°C ausgelegt. Um die Effektivität des Wärmetauschprozesses im Kühlschacht 17 zu optimieren, wird das im Hochdruckwasserabscheidekreislauf gewonnene Wasser mit einer Temperatur von ca. t=30°C und einem Druck von ca. 5 bar im Kühlschacht in feinen Tröpfchen zur dortigen Verdampfung zugeführt, wodurch die Effektivität der Wärmetauscher 20 und 14 verbessert wird.

Mittels einer Bypass-Einrichtung 28 kann die aus dem Hauptwärmetauscher 20 stammende hochgespannte Luft unmittelbar auf die zweite Entspannungsturbine T2 gegeben werden, ohne daß sie den Wasserabscheidekreislauf durchläuft. Dies kann insbesondere dann interessant sein, wenn die abgezapfte Luft bereits so trokken ist, daß sie nicht mehr entfeuchtet werden muß. Dies ist insbesondere beim Fliegen in großen Flughöhen der Fall.

Mit dem Wasserabscheidekreislauf aus dem zuvor beschriebenen bekannten Klimatisierungssystem läßt sich eine hinreichend trockene Luft erreichen. Nachteilig ist es jedoch, daß der Kondensator und der vorgeschaltete Wärmetauscher zur Entfeuchtung der hochgespannten feuchten Luft groß bauen. Das trifft insbesondere für den Wärmetauscher zu, da hier nur ein geringes Temperaturgefälle ΔT für die Wärmeübertragungsaufgabe zur Verfügung steht. In der Flugzeugtechnik ist es aber oberste Prämisse, möglichst klein und leicht zu bauen.

Die Aufgabe der vorliegenden Erfindung ist es daher, ein Klimatisierungssystem für Flugzeuge nach dem Oberbegriff des Anspruchs 1 derart weiterzubilden, daß die Abmessung der Gesamtvorrichtung verkleinert und diese insgesamt leichter werden kann.

Erfindungsgemäß wird diese Aufgabe ausgehend von einem Klimatisierungssystem nach dem Oberbegriff des Anspruchs 1 durch die Kombination mit den Merkmalen des kennzeichnenden Teils des Anspruchs 1 gelöst. Konzeptionell gelingt die Lösung der eingangs gestellten Aufgabe dadurch, daß die Konstruktion des Wasserabscheidekreislaufs verändert wird. An die Stelle des groß bauenden Kondensators mit vorgeschaltetem Wärmetauscher tritt eine Tropfenkoalesziervorrichtung, der in bekannter Art und Weise ein Wasserabscheider nachgeschaltet ist. Diese zur Entwässerung dienende Baueinheit ist nach der ersten Entspannungsturbine eingebaut. Entsprechend der Erfindung wird die aus dem Hauptwärmetauscher kommende hochgespannte aber noch feuchte Luft bei ca. 45°C auf die erste Entspannungsturbine gegeben. Aus der Entspannungsturbine wird die in einer ersten Stufe entspannte immer noch feuchte Luft, in der aufgrund der Temperaturabsenkung die Feuchtigkeit in sehr feine Tröpfchen auskondensiert ist, in eine Tropfenkoalesziervorrichtung gegeben, die zum Koaleszieren der feinsten nebelartigen Tröpfchen zu größeren Tropfen dient, wobei diese größeren Tropfen in dem Wasserabscheider anschließend abgeschieden werden können. Die Tropfenkoalesziervorrichtung kann besteht aus einem Luft-Luft-Wärmetauscher und aus mindestens einem sich in strömungsrichtung erstreckenden Krümmer bestehen. In diese wird die aus der Entspannungsturbine T1 austretende drallförmigen Luftströmung, in der die fein verteilten Tröpfchen enthalten sind, geleitet. Durch den Drall der Luftströmung bzw. der Luftwirbel werden die Wassertröpfchen auf die Rohrwandung und die Prallbleche geschleudert und auf deren Oberfläche zu gröβeren Tropfen vereinigt. Diese werden von der Strömung zum Wasserabscheider hin mitgerissen und dort abgeschieden. Mit der Vorrichtung kann eine Entfeuchtung der Luft von 90 bis 95% erfolgen.

Besonders vorteilhafte Ausgestaltungen der Erfindung ergeben sich aus dem sich an den Hauptanspruch anschließenden Unteransprüchen.

Der Tropfenkoalesziervorrichtung mit nachgeschaltetem Wasserabscheider kann ein Wärmetauscher nachgeschaltet sein, in dem die vom ersten zum zweiten Verdichter strömende Luft die aus der ersten Entspannungsturbine stammende und zwischenzeitlich im Wasserabscheider entfeuchtete Luft aufwärmt wird, bevor sie in die zweite Entspannungsturbine geleitet wird. Durch diese Maßnahme wird das in der Luft eventuell noch vorhandene Wasser in die Gasphase überführt. Somit enthält die Luft, wenn sie in die zweite Entspannungsturbine einströmt, mit Sicherheit kein freies Wasser mehr. Eventuell vorhandenes freies Wasser kann zur Erosion der Turbinendüsen führen oder für den Fall von Austrittstemperaturen unter dem Gefrierpunkt zur Vereisung der zweiten Entspannungsturbine. Gleichzeitig wird die Luft vor Eintritt in die zweite Entspannungsturbine erwärmt, wodurch sich eine höhere Turbinenleistung ergibt. Aufgrund dieser Schaltung wird als zusätzlicher Nebeneffekt auch noch erreicht, daß die aus dem ersten Verdichter stammende Luft zwischengekühlt wird, wodurch der Wirkungsgrad und insbesondere der Wasserabscheidegrad des Klimatisierungssystems weiterhin verbessert wird.

Zur Verbesserung der Austauschleistung des Wärmetauschers kann dieser zweigeteilt sein, wobei die zwischen dem ersten und zweiten Verdichter geführte Luft im zweiten Teil des Wärmetauschers die in die erste Entspannungsturbine eintretende Luft vorwärmt. Hierdurch wird die Luft auf ein höheres Temperaturniveau gebracht, wodurch die Turbinenleistung verbessert wird.

Gemäß einer weiteren Ausführungsvariante der Erfindung kann ein zweiter Wasserabscheider vorhanden sein, durch den die in die erste Entspannungsturbine geführte Luft zumindest teilweise entwässert wird, bevor sie in den Wärmetauscher, der wie die übrigen Wärmetauscher als Regenerativwärmetauscher ausgebildet ist, geleitet wird. Hier kann für den Fall, daß bereits bei der hochgespannten Luft mit freiem Wasser gerechnet wird, dieses abgezogen werden, so daß der weitere Hochdruckwasserabscheidekreislauf durch dieses freie Wasser nicht noch zusätzlich belastet wird.

In dem Klimatisierungssystem kann eine erste Bypass-Einrichtung zur Umgehung der ersten Entspannungsturbine vorgesehen sein, wobei die Luft unmittelbar auf die zweite Entspannungsturbine gegeben werden kann. Hierdurch wird der Wasserabscheidekreislauf umgangen. Dies ist insbesondere dann möglich, wenn die Zapfluft aus trockener Umgebungsluft, beispielsweise aus Umgebungsluft in großer Flughöhe, besteht.

Für den Fall, daß das aus der ersten Entspannungsturbine und dem zweiten Verdichter bestehende Zweiradsystem ausfällt, kann über eine zweite vorgesehene Bypass-Vorrichtung die hochgespannte Luft statt in die erste Turbine unmittelbar in die Tropfenkoalesziervorrichtung geführt werden, die entsprechend dieser Ausführungsvariante aus einem Luft-Luft-Wärmetauscher besteht. Die hochgespannte vergleichsweise warme Luft wird durch die ebenfalls durch den Wärmetauscher geführte kalte Luft, die aus der zweiten Entspannungsturbine zugeführt wird und die ebenfalls durch den Wärmetauscher geführt wird, abgekühlt. Hierdurch kondensiert in der hochgespannten Luft freies Wasser aus, das im nachgeschalteten Wasserabscheider weitgehend abgeschieden werden kann.

Für den Fall, daß an den Restfeuchtegehalt der in die Flugzeugkabine geleiteten Luft keine sehr hohen Ansprüche gestellt werden, kann in einer alternativen Ausgestaltung der Erfindung die aus der ersten Entspannungsturbine austretende Luft unmittelbar in den zwischen der ersten Entspannungsturbine und der zweiten Entspannungsturbine angeordneten Wasserabscheider geleitet werden. Bei diesem Anwendungsfall kann auf die Koalesziervorrichtung verzichtet werden. Versuche haben überraschend ergeben, daß die aus der Turbine austretende Drallströmung im anschließenden Rohr oder Krümmer und an den Wandungen sowie der Dralleinrichtung des Wasserabscheiders ebenfalls zur Koaleszenz in größere Tropfen neigt, so daß ein Teil des freien Wassers im Wasserabscheider auch dann abgezogen werden kann, falls keine eigens dafür vorgesehene Koalesziervorrichtung vorgeschaltet ist.

Weiterhin wird Schutz beansprucht für eine Vorrichtung zum Koaleszieren von feinsten Tropfen, insbesondere zur Verwendung in einem Klimatisierungssystem für Flugzeuge mit den vorgenannten Merkmalen. Diese Koalesziervorrichtung besteht in ihrem Aufbau aus einem Luft-Luft-Wärmetauscher mit den Merkmalen des Anspruchs 12 Tests bestätigen, daß in Form von sehr feinen nebelartigen Tröpfen vorliegendes freies Wasser an den Wandungen des Wärmetauschers koaleszieren und von der Strömung mitgerissen werden. Die größeren koaleszierten Tropfen können dann in einem Wasserabscheider abgeschieden werden. In einem Luft-Luft-Wärmetauscher sind üblicherweise zwischen den parallelen Wandungen zur Vergrößerung der Wärmeaustauschfläche näherungsweise wellenlinienförmig geformte Bleche angeordnet. Insbesondere an diesen in die Strömung hineinragenden Blechen koaleszieren die feinen Tröpfen gut zu größeren Tropfen.

In dieses Ausgestaltung der Erfindung ist eine Wärmetauscherpackung, die als Koalesziervorrichtung verwendet wird in einem Gehäuse angeordnet, wobei hier ein zu der Wärmetauscherpackung angeordneter paralleler Kanal freigelassen ist. Über eine schwenkbare Klappe kann die zugeführte Luft ganz oder teilweise über die Wärmetauscherpackung geführt werden bzw. an dieser in dem freien Kanal innerhalb des Gehäuses vorbeigeführt werden.

Weitere Einzelheiten und Vorteile der Erfindung werden im folgenden anhand der in den Figuren dargestellten Ausführungsbeispielen näher erläutert. Es zeigen:
- Fig. 1:: ein Klimatisierungssystem nach dem Stand der Technik,
- Fig. 2:: eine schematische Darstellung einer ersten Ausführungsvariante des erfindungsgemäßen Klimatisierungssystems,
- Fig. 3:: den schematischen Längsschnitt durch eine Tropfenkoalesziervorrichtung, wie sie in der vorliegenden Erfindung eingesetzt wird,
- Fig. 4:: eine schematische Darstellung einer zweiten Ausführungsvariante der vorliegenden Erfindung und
- Fig. 5:: eine schematische Darstellung einer dritten Ausführungsform des erfindungsgemäßen Klimatisierungssystems.

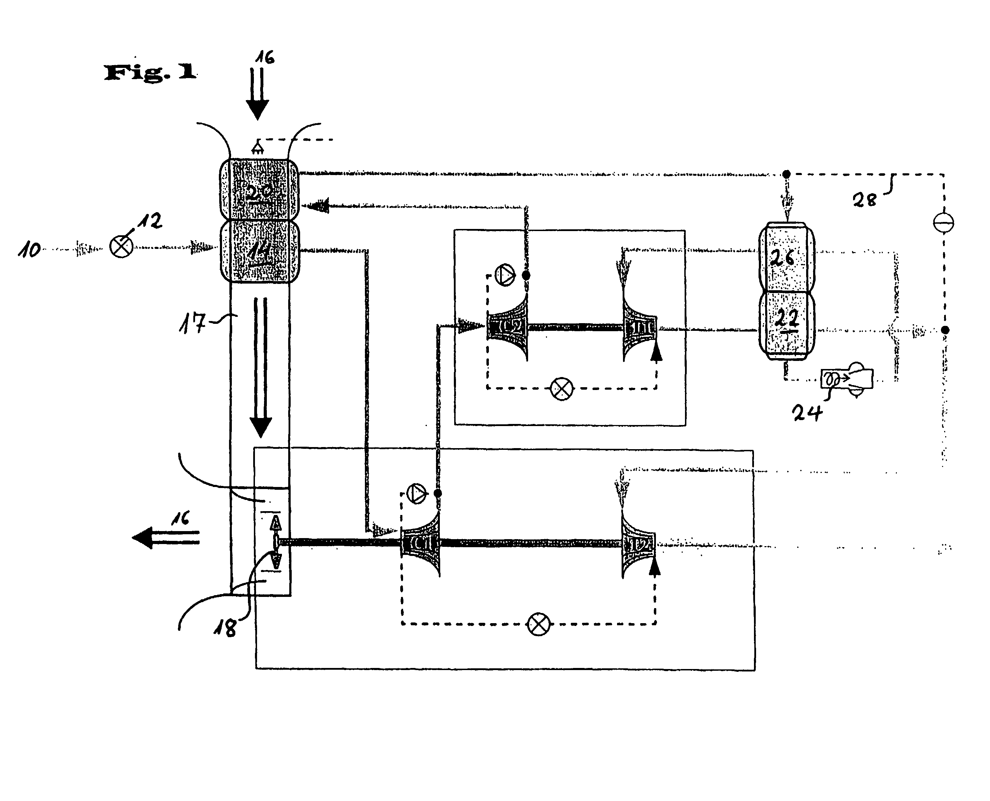

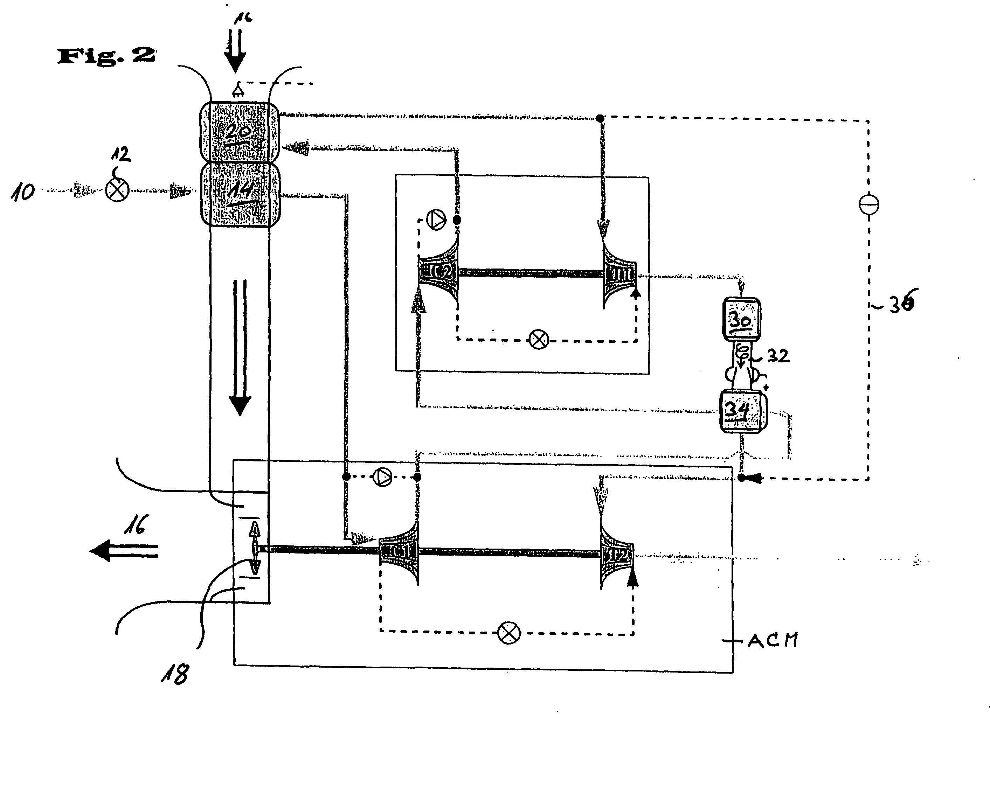

Fig. 2 zeigt ein Klimatisierungssystem, das sich von dem Klimatisierungssystem gemäß dem Stand der Technik entsprechend Fig. 1 im wesentlichen durch den Wasserabscheidemechanismus unterscheidet. Im in der Fig. 2 dargestellten Klimatisierungssystem bilden der Verdichter C1 der ersten Verdichterstufe zusammen mit der Entspannungsturbine T2 und dem Ventilator 18 eine Dreiradmaschine ACM. Das bedeutet, daß der Verdichter C1 und der Ventilator 11 durch die in der Entspannungsturbine T2 gewonnene Energie regenerativ angetrieben werden. Der zweite Verdichter C2 ist mit der Entspannungsturbine T1 gekoppelt, wobei er durch die in der Entspannungsturbine T2 gewonnene Energie ebenfalls regenerativ angetrieben wird. Somit handelt es sich bei dem in Fig. 2 dargestellten Klimatisierungssystem um eine 2 + 3-Rad-Maschine. Insofern entspricht das Klimatisierungssystem der Fig. 2 demjenigen nach dem Stand der Technik gemäß Fig. 1. Gleiche Teile sind hier auch mit gleichen Bezugsziffern gekennzeichnet.

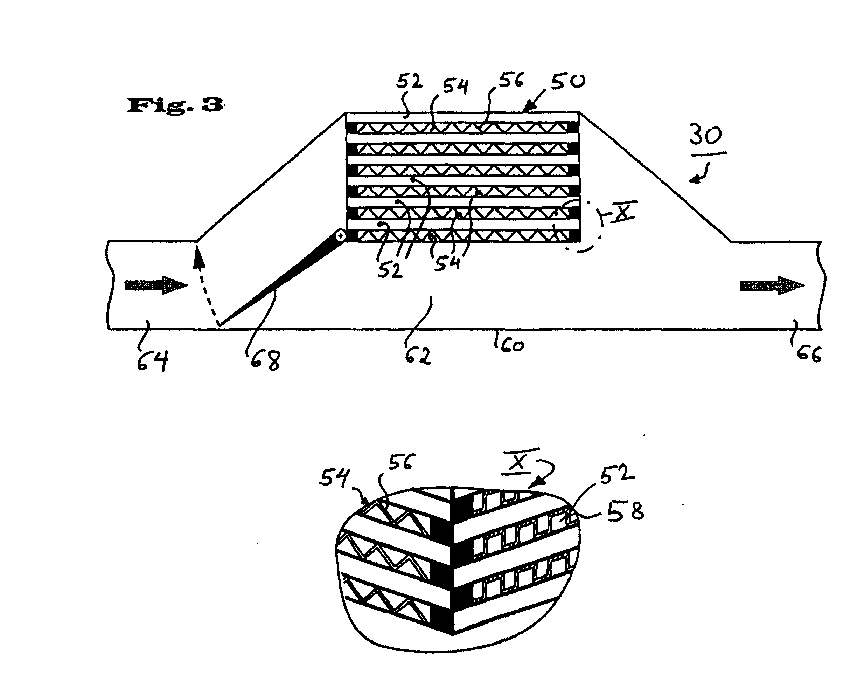

Allerdings unterscheidet sich das Klimatisierungssystem gemäß dem Ausführungsbeispiel nach Fig. 2 im Wasserabscheidekreislauf von dem Stand der Technik. Hier wird die aus dem Hauptwärmetauscher 20 kommende hochgespannte Luft auf die erste Entspannungsturbine T1 gegeben. Aufgrund der Entspannung sinken Druck und Temperatur. Hierdurch kondensiert Wasser aus. Die aus der ersten Turbine T1 austretende Luft weist das Wasser in einem sehr fein verteilten Nebel auf. Diese Luft wird in eine Tropfenkoalesziervorrichtung 30 geleitet, die in dem hier dargestellten Ausführungsbeispiel aus einer Luft-Luft-Wärmetauscherpackung, wie sie später anhand der Fig. 3 näher erläutert wird, bestehen kann. An den Blechen der Wärmetauscherpackung koaleszieren die feinen Tröpfchen zu größeren Tropfen, die durch die Strömung mitgerissen werden und in einem der Tropfenkoalesziervorrichtung 30 nachgeschalteten Wasserabscheider 32 abgeschieden werden können. Die nunmehr um 90% bis 95% entwässerte Luft wird in einen Wärmetauscher 34 geleitet, wo sie um wenige Kelvin erwärmt wird, so daß das freie Wasser in die Gasphase übergeht. Die somit vollständig von freiem Wasser befreite Luft wird vom Wärmetauscher 34 auf eine zweite Entspannungsturbine T2 geleitet, wo sie dann bis auf den gewünschten Umgebungsdruck, wie er in der Flugzeugkabine herrscht, abgesenkt wird.

Die Entwässerung erfolgt bei dem erfindungsgemäßen Klimatisierungssystem also nicht mehr vor der ersten Entspannungsturbine, sondern erfindungsgemäß zwischen den beiden vorhandenen Entspannungsturbinen. Daher wird dieses System auch als "Interstage Water Separation" bezeichnet.

Im Wärmetauscher 34 wird die aus dem Wasserabscheider 32 stammende Luft dadurch erwärmt, daß im Kreuzstrom zu dieser die aus dem Verdichter C1 ausströmende Luft, die zum Verdichter C2 weitergeführt wird, geleitet wird. Gemäß einem Auslegungsbeispiel kann die aus dem Verdichter C1 stammende Luft eine Temperatur von ca. 100°C bei einem Druck von 3,5 bar aufweisen. Im Wärmetauscher 34 wird diese Luft beispielsweise auf 90°C abgekühlt. Diese Zwischenkühlung führt in energetisch effektiver Weise auch zu einer Absenkung des gesamten nachfolgenden Temperaturniveaus der zu konditionierenden Luft bis hin zum Wasserabscheider. Am Regenerativwärmetauscher 34 liegt ein hohes Temperaturgefälle ΔT vor, wodurch die gesamte Baugröße des Wärmetauschers im Vergleich zum Stand der Technik erheblich verkleinert werden kann. Tritt die Luft nach dem Wasserabscheider beispielsweise mit 15°C in den Wärmetauscher ein beträgt das Temperaturgefälle ΔT 85K.

Mit 36 ist in Fig. 2 eine Bypass-Einrichtung bezeichnet, mittels derer die aus dem Hauptwärmetauscher 20 kommende hochgespannte Luft unmittelbar auf die zweite Entspannungsturbine gegeben werden kann. Mit dieser Bypass-Einrichtung kann also der Wasserabscheidekreislauf umgangen werden. Dies empfiehlt sich dann, falls die Umgebungsluft des Flugzeugs sehr trocken ist, wie dies beispielsweise während des Flugbetriebs der Fall ist. In diesem Fall wird das Klimatisierungssystem als Dreiradsystem betrieben.

Falls auf die in die Flugzeugkabine strömende Luft keine besonders hohen Anforderungen an den Restfeuchtegehalt gestellt werden, kann zur weiteren Reduzierung der Baugröße in Abwandlung der in Fig. 2 dargestellten Ausführungsform auf die Tropfenkoalesziervorrichtung 30 verzichtet werden. Versuche haben ergeben, daß bereits im Wasserabscheider (mit Dralleinrichtung) die aus der Entspannungsturbine T1 strömende Luft bereits entwässert werden kann.

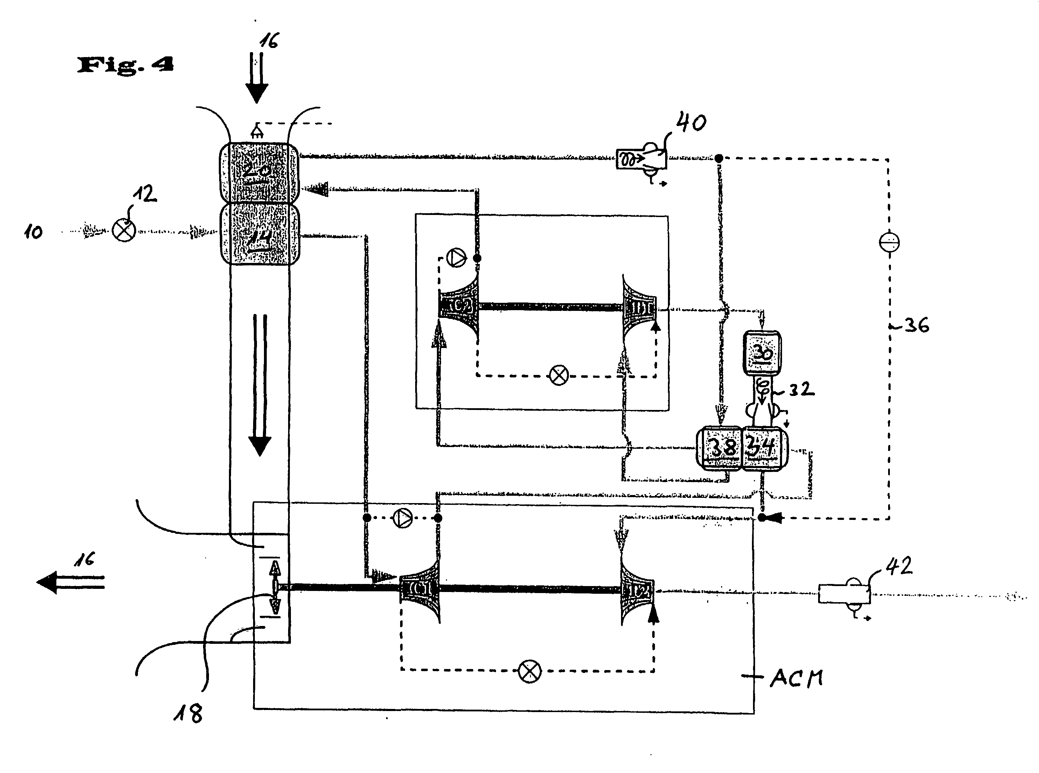

Die Ausführungsvariante gemäß Fig. 4 entspricht im wesentlichen derjenigen gemäß Fig. 3. Hier ist allerdings der dem Wasserabscheider 32 nachgeschaltete Wärmetauscher zweiteilig aufgebaut. Zum einen handelt es sich um einen der vorherigen Ausführungsvariante baugleichen Wärmetauscher 34, in welchem die aus der Entspannungsturbine T1 austretende Luft gegenüber der aus dem Verdichter C1 austretenden Luft im Kreuzstrom geführt wird. Diesem Wärmetauscher nachgeschaltet ist aber ein zweiter baugleicher Wärmetauscher, in welchem die aus der ersten Wärmetauscherhälfte 34 stammende Luft, die aus dem Verdichter C1 stammt, im Verhältnis zu der hochgespannte Luft aus dem Hauptwärmetauscher 20 ebenfalls im Kreuzstrom geführt wird. In der hier dargestellten Ausführungsform sind zusätzlich zwei Wasserabscheider 40 und 42 vorgesehen, wobei der Wasserabscheider 40 zur Abscheidung von freiem Wasser in der aus dem Hauptwärmetauscher 20 strömenden hochgespannten Luft dient. Der Wasserabscheider 42 ist der zweiten Entspannungsturbine T2 nachgeschaltet. Dieser Wasserabscheider 42 ist bevorzugt ohne Dralleinrichtung ausgeführt, um die Vereisungsgefahr zu minimieren.

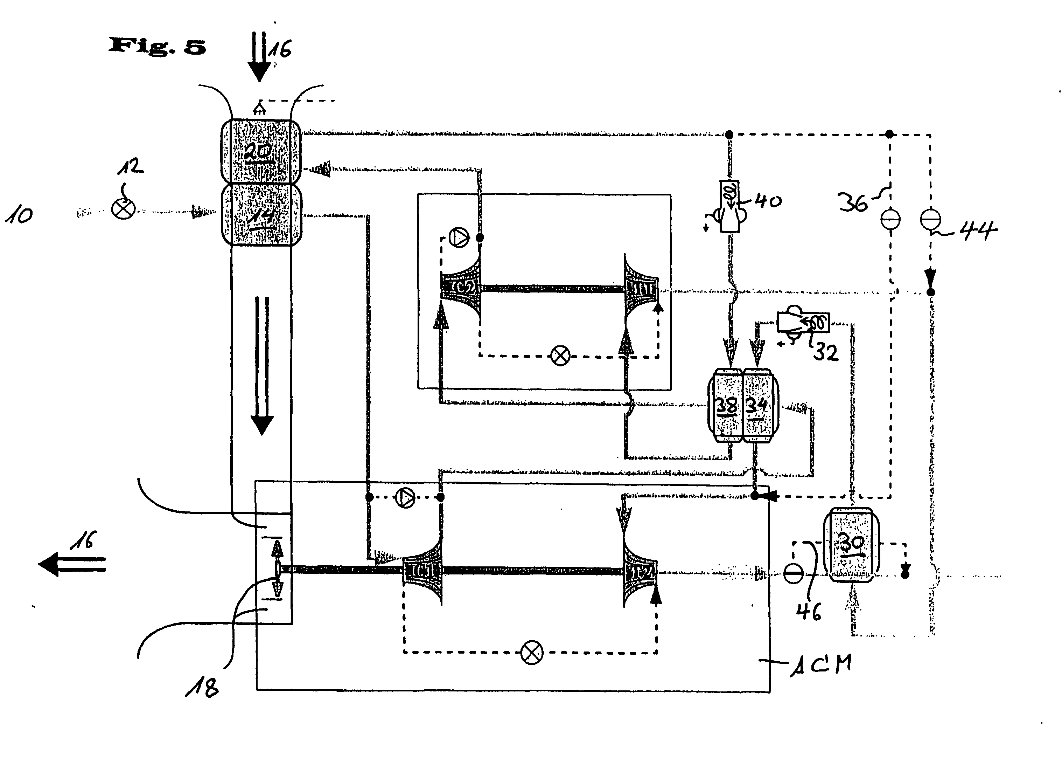

Die in Fig 5 dargestellte Ausführungsform der Erfindung entspricht im wesentlichen der Ausführungsform gemäß Fig. 4. Gleiche Teile sind hier wieder mit der gleichen Bezugsziffer bezeichnet. Diese Ausführungsvariante weist aber im Unterschied zur Ausführungsform gemäß Fig. 4 eine zweite Bypass-Einrichtung 44 auf, die anders als die Bypass-Einrichtung 36 den hochgespannten Luftstrom aus dem Hauptwärmetauscher 20 nicht unmittelbar auf die zweite Entspannunsturbine T2 aufgibt, sondern in die Tropfenkoalesziervorrichtung 30 leitet.

Die Tropfenkoalesziervorrichtung 30 ist in ihrem Aufbau schematisch in Fig. 3 dargestellt. Das Kernstück der Tropfenkoalesziervorrichtung ist ein Luft-Luft-Wärmetauscher 50 üblicher Bauart eines Kondensators. Bevorzugt kommt die Bauart gemäß der EP 0019492 zum Einsatz. Das bedeutet, daß dieser Wärmetauscher aus mehreren parallelen Schichten besteht, durch die jeweils beispielsweise im 90°-Winkel zueinander Luft unterschiedlicher Temperaturen geleitet wird. Um hier einen möglichst guten Wärmeübergang zwischen den Luftvolumentströmen unterschiedlicher Temperatur sicherzustellen, sind die einzelnen parallelen Ebenen von näherungsweise wellenförmig geformten Blechen 56, 58 durchzogen. Die Bleche können dabei unterschiedliche Formen aufweisen. So sind die Bleche 56 jeweils schräg zu der Ebene angestellt, während die Bleche 58 parallel bzw. im rechten Winkel zu der Ebene verlaufen (meanderförmig). Dies ist aus der perspektivischen vergrößerten Detailansicht X deutlich zu ersehen. Die Verwendung des Wärmetauschers als Tropfenkoalesziervorrichtung ist allerdings nicht auf die hier beispielhaft dargestellte Ausführungsvariante beschränkt. Es lassen sich beliebige andere Einbauten ebenso wirkungsvoll als Tropfenkoalesziervorrichtung einsetzen. Der Wärmetauscher kann darüberhinaus auch im Gegen- oder Gleichstrom betrieben werden.

Die hochgespannte feuchte Luft strömt durch die Ebenen 54 mit den Einbauten 56. Dies ist im übrigen nicht nur im Ausführungsbeispiel gemäß Fig. 5 der Fall, sondern auch in den Ausführungsbeispielen gemäß der Fig. 2 und 4. Während nun in den Ausführungsvarianten gemäß der Fig. 2 und 4 die Tropfenkoalesziervorrichtung lediglich aus der Wärmetauscherpackung 50 besteht, ist dieses in der Ausführungsvariante gemäß der Fig. 5 in einem Gehäuse 60 derart angeordnet, daß neben der Wärmetauscherpackung 50 ein Bypass 62 freigelassen ist. In das Gehäuse 62 führt eine Zuführleitung 64 und aus dem Gehäuse heraus führt eine Abführleitung 66. Über die Zuführleitung 64 wird aus der Entspannungsturbine T2 kommende Luft in das Gehäuse 60 eingeleitet. Mittels einer schwenkbaren Klappe 68 kann diese entweder durch den Bypass-Kanal 62 oder durch die Kanäle 52 des Wärmetauscherpakets 50 geführt werden.

Wird nun in der Ausführungsform gemäß Fig. 5 mittels der Bypass-Einrichtung 44 die hochgespannte vergleichsweise warme Luft unmittelbar in die Vorrichtung 30 gegeben, so wird bevorzugt gleichzeitig die aus der Entspannungsturbine T2 kommende kalte Luft im Kreuzstrom durch die Vorrichtung 30 geführt. Die hochgespannte Luft kühlt ab, so daß Wasser auskondensiert und teilweise gleichzeitig in der Vorrichtung 30 koalesziert. Dieses Wasser wird im nachgeschalteten Wasserabscheider 32 abgeschieden. Durch diese Bypass-Schaltung kann die Zweiradmaschine, die aus der Entspannungsturbine T1 und dem Verdichter C2 besteht, umgangen werden, falls diese beispielsweise im Betrieb ausfällt.

## Patentansprüche

1. Klimatisierungssystem für Flugzeuge zum Aufbereiten von Feuchtigkeit enthaltender, unter Überdruck stehender Luft zur Klimatisierung einer Flugzeugkabine mit:
- mindestens einem Verdichter (C1, C2) zum Verdichten der bereits unter Überdruck zugeführten Luft (10) auf einen noch höheren Druck,
- einer ersten Entspannungsturbine (T1) zum Entspannen der Luft auf einen niedrigeren Druck,
- und einer zweiten dieser ersten nachgeschalteten Entspannungsturbine (T2) zum weiteren Entspannen der Luft,
**dadurch gekennzeichnet,**
**daß** zwischen der ersten Entspannungsturbine (T1) und der zweiten Entspannungsturbine (T2) eine Tropfenkoalesziervorrichtung (30) mit nachgeschaltetem Wasserabscheider (32) angeordnet ist, wobei die Tropfenkoalesziervorrichtung aus einem Luft-Luft-Wärmetauscher (30) besteht.

2. Klimatisierungssystem nach Anspruch 1, **dadurch gekennzeichnet, daß** die Tropfenkoalesziervorrichtung aus mindestens einer sich in Strömungsrichtung erstreckenden Wandung, beispielsweise einem Rohrkrümmer, besteht.

3. Klimatisierungssystem nach Anspruch 1 oder 2, **dadurch gekennzeichnet, daß** es nur einen Verdichter (C2) zum Verdichten der unter Überdruck zugeführten Luft (10) auf einen noch höheren Druck aufweist.

4. Klimatisierungssystem nach Anspruch 3, **dadurch gekennzeichnet, daß** der Verdichter (C2), die erste Entspannungsturbine (T1) und die zweite Entspannungsturbine (T2) , sowie gegebenenfalls ein Ventilator (18) auf einer Welle angeordnet sind.

5. Klimatisierungssystem nach Anspruch 1 oder 2, **dadurch gekennzeichnet, daß** dem Verdichter (C1) zum Verdichten der bereits unter Überdruck zugeführten Luft (10) auf ein noch höheres Druckniveau ein zweiter Verdichter (C2) nachgeschaltet ist.

6. Klimatisierungssystem nach Anspruch 5, **dadurch gekennzeichnet, daß** der Tropfenkoalesziervorrichtung (30) mit nachgeschaltetem Wasserabscheider (32) ein Wärmetauscher (34) nachgeschaltet ist, in dem die vom ersten (C1) zu einem zweiten Verdichter (C2) strömende Luft die aus der ersten Entspannungsturbine (T1) stammende und zwischenzeitlich im Wasserabscheider (32) entfeuchtete Luft aufgewärmt wird, bevor diese in die zweite Entspannungsturbine (T2) geleitet wird.

7. Klimatisierungssystem nach Anspruch 6, **dadurch gekennzeichnet, daß** der Wärmetauscher zweigeteilt ist, wobei die zwischen dem ersten Verdichter (C1) und dem zweiten Verdichter (C2) geführte Luft im zweiten Teil des Wärmetauschers (38) die in die erste Entspannungsturbine (T1) eintretende Luft vorwärmt.

8. Klimatisierungssystem nach Anspruch 7, **dadurch gekennzeichnet, daß** ein zweiter Wasserabscheider (40) vorhanden ist, durch den die in die erste Entspannungsturbine (T1) geführte Luft zumindest teilweise entwässert wird, bevor sie in den Wärmetauscher (38) geleitet wird.

9. Klimatisierungssystem nach einem der Ansprüche 1 bis 8, **dadurch gekennzeichnet, daß** eine erste Bypass-Einrichtung (36) zur Umgehung der ersten Entspannungsturbine (T1) vorgesehen ist, wobei die Luft unmittelbar auf die zweite Entspannungsturbine (T2) gegeben wird.

10. Klimatisierungssystem nach einem der Ansprüche 1 bis 9, **dadurch gekennzeichnet, daß** eine zweite Bypass-Einrichtung (44) zur Umgehung der ersten Turbine (T1) vorgesehen ist, wobei die Luft der aus einem Luft-Luft-Wärmetauscher bestehenden Tropfenkoalesziervorrichtung (30) zugeführt wird, während andererseits die aus der Entspannungsturbine (T2) strömende Luft durch diesen Wärmetauscher (30) geführt wird.

11. Klimatisierungssystem nach einem der Ansprüche 1 bis 10, **dadurch gekennzeichnet, daß** die aus der ersten Entspannungsturbine (T1) austretende Luft unmittelbar in den zwischen der ersten Entspannungsturbine (T1) und der zweiten Entspannungsturbine (T2) angeordneten Wasserabscheider (32) geleitet wird.

12. Vorrichtung (30) zum Koaleszieren von feinsten Tropfen, insbesondere zur Verwendung in einem Klimatisierungssystem für Flugzeuge nach den Ansprüchen 1 bis 11, **dadurch gekennzeichnet, daß** sie in ihrem Aufbau einem Luft-Luft-Wärmetauscher entspricht, in welchem zwischen parallelen Wandungen zur Vergrößerung der Wärmeaustauschfläche Bleche, vorzugsweise näherungsweise wellenlinienförmig geformte Bleche, angeordnet sind, wobei in einem Teil eines Gehäuses eine Wärmetauscherpackung angeordnet ist, während ein paralleler Kanal freigelassen ist und daß über eine schwenkbare Klappe (68) oder ein Ventil zugeführte Luft ganz oder teilweise über die Wärmetauscherpackung geführt werden kann bzw. an dieser in den freien Kanal innerhalb des Gehäuses vorbeigeführt werden kann.

13. Verwendung einer Vorrichtung zum Koaleszieren von feinsten Tropfen, die in ihrem Aufbau einem Luft-Luft-Wärmetauscher entspricht, in welchem zwischen parallelen Wandungen zur Vergrößerung der Wärmeaustauschfläche Bleche, vorzugsweise näherungsweise wellenlinienförmige Bleche, angeordnet sind, in einem Klimatisierungssystem für Flugzeuge.

## Claims

1. Air-conditioning system for aircraft for providing air which contains moisture and is under superatmospheric pressure for air-conditioning an aircraft cabin, having:
- at least one compressor (C1, C2) for compressing the air (10), which is already supplied at superatmospheric pressure, to an even higher pressure,
- a first expansion turbine (T1) for expanding the air to a lower pressure,
- and a second expansion turbine (T2), connected downstream of the first, for further expansion of the air,
**characterized in that** a drop-coalescing device (30) with downstream water separator (32) is arranged between the first expansion turbine (T1) and the second expansion turbine (T2), the drop-coalescing device comprising an air-air heat exchanger (30).

2. Air-conditioning system according to Claim 1, **characterized in that** the drop-coalescing device comprises at least one wall, for example a tube bend, extending in the direction of flow.

3. Air-conditioning system according to Claim 1 or 2, **characterized in that** it has just one compressor (C2) for compressing the air (10), which is supplied at superatmospheric pressure, to an even higher pressure.

4. Air-conditioning system according to Claim 3, **characterized in that** the compressor (C2), the first expansion turbine (T1) and the second expansion turbine (T2), and optionally also a fan (18), are arranged on one shaft.

5. Air-conditioning system according to Claim 1 or 2, **characterized in that** a second compressor (C2) is connected downstream of the compressor (C1) for compressing the air (10), which is already supplied at superatmospheric pressure, to an even higher pressure level.

6. Air-conditioning system according to Claim 5, **characterized in that** a heat exchanger (34), in which the air flowing from the first compressor (C1) to a second compressor (C2) is heated by the air which originates from the first expansion turbine (T1) and has in the meantime been dehumidified in the water separator (32) before this air is passed into the second expansion turbine (T2), is connected downstream of the drop-coalescing device (30) with downstream water separator (32).

7. Air-conditioning system according to Claim 6, **characterized in that** the heat exchanger is in two parts, with the air which is routed between the first compressor (C1) and the second compressor (C2) preheating the air which enters the first expansion turbine (T1) in the second part of the heat exchanger (38).

8. Air-conditioning system according to Claim 7, **characterized in that** there is a second water separator (40), by means of which the air routed into the first expansion turbine (T1) is at least partially dewatered before being passed into the heat exchanger (38).

9. Air-conditioning system according to one of Claims 1 to 8, **characterized in that** there is a first bypass device (36) for bypassing the first expansion turbine (T1), with the air being added directly to the second expansion turbine (T2).

10. Air-conditioning system according to one of Claims 1 to 9, **characterized in that** there is a second bypass device (44) for bypassing the first turbine (T1), with the air being fed to the drop-coalescing device (30), which comprises an air-air heat exchanger, while on the other side the air flowing out of the expansion turbine (T2) is routed through this heat exchanger (30).

11. Air-conditioning system according to one of Claims 1 to 10, **characterized in that** the air which emerges from the first expansion turbine (T1) is passed directly into the water separator (32) arranged between the first expansion turbine (T1) and the second expansion turbine (T2).

12. Device (30) for coalescing ultrafine drops, in particular for use in an air-conditioning system for aircraft according to Claims 1 to 11, **characterized in that** its structure corresponds to that of an air-air heat exchanger, in which metal sheets, preferably metal sheets which are approximately wavy, are arranged between parallel walls in order to increase the heat-exchange surface area, with a heat exchanger packing being arranged in one part of a housing, while a parallel duct is left clear, and **in that** air which is supplied can be routed completely or partially across the heat exchanger packing or can be made to bypass the heat exchanger packing by being passed into the clear duct inside the housing, by means of a pivotable flap (68) or a valve.

13. Use of a device for coalescing ultrafine drops which in terms of its structure corresponds to that of an air-air heat exchanger in which metal sheets, preferably metal sheets which are approximately wavy, are arranged between parallel walls in order to increase the heat-exchange surface area, in an air-conditioning system for aircraft.

## Revendications

1. Système de conditionnement d'air pour des avions pour la préparation d'air contenant de l'humidité, sous surpression, pour la climatisation d'une cabine d'avion, comportant:
- au moins un condenseur (C1,C2) pour condenser l'air (10) déjà amené sous surpression à une pression encore plus élevée,
- une première turbine de détente (T1) pour détendre l'air à une pression plus basse,
- et une deuxième turbine de détente (T2) disposée en aval de celle-ci pour la détente ultérieure de l'air,
**caractérisé en ce qu'**il est disposé entre la première turbine de détente (T1) et la deuxième turbine de détente (T2) un dispositif de coalescence de gouttes (30) avec un séparateur d'eau (32) disposé en aval, où le dispositif de coalescence de gouttes est constitué d'un échangeur de chaleur air-air (30).

2. Système de conditionnement d'air selon la revendication 1, **caractérisé en ce que** le dispositif de coalescence de gouttes est constitué d'au moins une paroi s'étendant dans la direction d'écoulement, par exemple, d'un tuyau coudé.

3. Système de conditionnement d'air selon la revendication 1 ou 2, **caractérisé en ce qu'**il présente seulement un condenseur (C2) pour condenser l'air (10) amené sous surpression à une pression encore plus élevée.

4. Système de conditionnement d'air selon la revendication 3, **caractérisé en ce que** le condenseur (C2), la première turbine de détente (T1) et la deuxième turbine de détente (T2), ainsi que le cas échéant un ventilateur (18) sont disposés sur un arbre.

5. Système de conditionnement d'air selon la revendication 1 ou 2, **caractérisé en ce qu'**il est disposé en aval du condenseur (C1), pour condenser l'air (10) déjà amené sous surpression à un niveau de pression encore plus élevé, un deuxième condenseur (C2).

6. Système de conditionnement d'air selon la revendication 5, **caractérisé en ce qu'**il est disposé en aval du dispositif de coalescence de gouttes (30), avec séparateur d'eau (32) disposé en aval, un échangeur de chaleur (34) dans lequel l'air s'écoulant du premier (C1) à un deuxième condenseur (C2) chauffe l'air provenant de la première turbine de détente (T1) et entre-temps déshumidifié dans le séparateur d'eau (32) avant que celui-ci ne soit guidé dans la deuxième turbine de détente (T2).

7. Système de conditionnement d'air selon la revendication 6, **caractérisé en ce que** l'échangeur de chaleur est en deux parties, où l'air guidé entre le premier condenseur (C1) et le deuxième condenseur (C2) dans la deuxième partie de l'échangeur de chaleur (38) préchauffe l'air entrant dans la première turbine de détente (T1).

8. Système de conditionnement d'air selon la revendication 7, **caractérisé en ce qu'**un deuxième séparateur d'eau (40) est prévu par lequel l'air guidé dans la première turbine de détente (T1) est au moins partiellement déshydraté avant qu'il ne soit guidé dans l'échangeur de chaleur (38).

9. Système de conditionnement d'air selon l'une des revendications 1 à 8, **caractérisé en ce qu'**il est prévu une première installation de contournement (36) pour contourner la première turbine de détente (T1), où l'air est dirigé directement vers la deuxième turbine de détente (T2).

10. Système de conditionnement d'air selon l'une des revendications 1 à 9, **caractérisé en ce qu'**une deuxième installation de contournement (44) pour contourner la première turbine (T1) est prévue, où l'air du dispositif de coalescence de gouttes (30) constitué de l'échangeur de chaleur air-air est amené, pendant que d'autre part, l'air s'écoulant de la turbine de détente (T2) est guidé à travers cet échangeur de chaleur (30).

11. Système de conditionnement d'air selon l'une des revendications 1 à 10, **caractérisé en ce que** l'air sortant de la première turbine de détente (T1) est guidé directement dans le séparateur d'eau (32) disposé entre la première turbine de détente (T1) et la deuxième turbine de détente (T2).

12. Dispositif (30) pour la coalescence de gouttes les plus fines, en particulier pour l'utilisation dans un système de conditionnement d'air pour des avions selon les revendications 1 à 11, **caractérisé en ce que**, par sa construction, il correspond à un échangeur de chaleur air-air dans lequel sont disposés entre des parois parallèles, pour agrandir la face d'échange de chaleur, des tôles, de préférence des tôles approximativement de forme ondulée, où dans une partie d'un boîtier, une garniture d'échange de chaleur est disposée, tandis qu'un canal parallèle reste libre, et **en ce que** l'air amené par un volet pivotant (68) ou une vanne peut être amené entièrement ou partiellement par la garniture d'échange de chaleur, respectivement, peut être amené à passer devant celle-ci dans le canal libre à l'intérieur du boîtier.

13. Utilisation d'un dispositif de coalescence de gouttes les plus fines, qui correspond par sa construction à un échangeur de chaleur air-air, dans lequel sont disposés entre des parois parallèles pour l'agrandissement de la face d'échange de chaleur des tôles, de préférence des tôles approximativement de forme ondulée, dans un système de conditionnement d'air pour des avions.
